(19) Europäisches Patentamt
European Patent Office
Office européen des brevets

(11) Veröffentlichungsnummer: **0 678 539 A2**

# (12) EUROPÄISCHE PATENTANMELDUNG

(21) Anmeldenummer: **95104474.2**

(22) Anmeldetag: **27.03.95**

(30) Priorität: **06.04.94 DE 4411757**
**23.06.94 DE 4421885**

(43) Veröffentlichungstag der Anmeldung:
**25.10.95 Patentblatt 95/43**

(84) Benannte Vertragsstaaten:
**CH DE ES FR GB IE IT LI NL**

(51) Int. Cl.[6]: **C08G 69/32**

(71) Anmelder: **HOECHST AKTIENGESELLSCHAFT**
**Brüningstrasse 50**
**D-65929 Frankfurt am Main (DE)**

(72) Erfinder: **Jung, Holger, Dr.**
**Feldbergblick 8**
**D-65527 Niedernhausen (DE)**
Erfinder: **Neuert, Richard, Dr.**
**Brunnerweg 2**
**D-90610 Winkelhaid (DE)**
Erfinder: **Klein, Peter, Dr.**
**Fasanenweg 13**
**D-65205 Wiesbaden (DE)**

## (54) Aromatische Copolyamide, Verfahren zu deren Herstellung, geformte Gebilde und deren Herstellung.

(57) Beschrieben werden aromatische Copolyamide enthaltend die wiederkehrenden Struktureinheiten der Formeln I, II und III

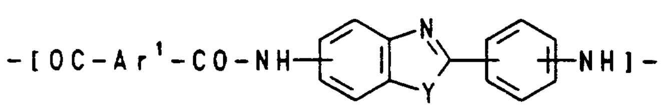 **(I),**

$-[OC-Ar^2-CO-NH-Ar^3-NH]-$ (II), und

$-[OC-Ar^4-CO-NH-Ar^5-NH]-$ (III),

worin $Ar^1$, $Ar^2$, $Ar^3$ und $Ar^4$ unabhängig voneinander zweiwertige aromatische Reste bedeuten, deren Valenzbindungen sich in para-Stellung oder in einer zu dieser Stellung vergleichbaren koaxialen oder parallelen Stellung zueinander befinden,
$Ar^5$ einen von $Ar^3$ unterschiedlichen zweiwertigen aromatischen Rest darstellt, dessen Valenzbindungen sich in para-Stellung oder in einer zu dieser Stellung vergleichbaren koaxialen oder parallelen Stellung zueinander befinden, oder $Ar^5$ einen zweiwertigen aromatischen Rest darstellt, dessen Valenzbindungen sich in meta-Stellung oder in einer zu dieser Stellung vergleichbaren gewinkelten Stellung zueinander befinden,
Y -O-, -S- oder $-NR^1-$ bedeutet, worin $R^1$ ein einwertiger organischer Rest oder insbesondere Wasserstoff ist, und
$Ar^1$, $Ar^2$, $Ar^3$, $Ar^4$ und $Ar^5$ unabhängig voneinander gegebenenfalls mit ein oder zwei gegenüber Carbonsäurechloriden inerten Resten substituiert sind.

EP 0 678 539 A2

Die vorliegende Erfindung betrifft neue aromatische Copolyamide, die aus ihren Lösungen in organischen Lösemitteln versponnen werden können sowie daraus hergestellte geformte Gebilde, sowie Verfahren zu ihrer Herstellung.

Aromatische Polyamide (Aramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschritt 22 19 703 beschrieben.

Dieses Polyamid weist eine Reihe von Vorzügen auf, seine Herstellung und seine Verarbeitung sind jedoch sehr schwierig. Wegen der Unlöslichkeit in polaren organischen Lösungsmitteln - und zwar auch in Gegenwart von anorganischen Salzen, wie Calciumchlorid oder Lithiumchlorid, als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurden beispielsweise in der Deutschen Patentschrift 25 56 883 und in der Deutschen Offenlegungsschrift 30 07 063 Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Die erhöhte Löslichkeit wird hier durch die meta-Orientierung und das Sauerstoffatom verursacht. Es besteht allerdings immer noch ein Bedarf an Aramiden, die sich aus bekannten Amid-Lösungsmitteln zu Fasern mit hohen Festigkeiten und Moduli verarbeiten lassen und die auf möglichst wirtschaftliche Weise zu geformten Gebilden verarbeitet werden können.

Ferner sind Aramide enthaltend wiederkehrende Struktureinheiten abgeleitet von 2-Aminophenyl-aminobenzimidazol, -benzoxazol oder -benzthiazol bekannt.

So werden in der DE-AS-2,530,875 (entsprechend US-A-4,018,735) die Herstellung und Verarbeitung von anisotropen Ausformlösungen beschrieben, welche derartige aromatische Polyamide in hohen Konzentrationen enthalten. Zur Herstellung der Ausformlösung wird insbesondere konzentrierte Schwefelsäure empfohlen, daneben sind organische Lösungsmittel erwähnt. Beschrieben werden unter anderem Copolyamide auf der Basis von Terephthalsäure, p-Phenylendiamin und 5-Amino-2-(p-aminophenyl)-benzimidazol.

Aus der DE-AS-2,211,241 ist ein Verfahren zur Herstellung von hochfesten, wärmebeständigen Fasern mit hohem Modul bekannt. In dieser Schrift wird das Verspinnen von heterocyclischen Einheiten enthaltenden aromatischen Polyamiden beschrieben, unter anderem von einem Polyamid abgeleitet von 2,6-Naphthalindi-carbonsäuredichlorid und 4,4'-Diamin-2-phenylbenzoxazol.

Aus der DE-A-2,726,178 ist ein Copolymer auf der Basis von Terephthalsäure, p-Phenylendiamin und 5-Amino-2-(p-aminophenyl)-benzoxazol bekannt.

Aus der GB-A-1,341,945 ist unter anderem ein Polymer auf der Basis von Terephthalsäure und 6-Amino-2-(p-aminophenyl)-benzthiazol bekannt.

Ferner beschreibt die DE-PS-2,208,811 aromatische Polyamide, die von 2-Aminophenyl-aminobenzimidazol und speziellen Naphthalindicarbonsäuren abgeleitet sind.

Mit der vorliegenden Erfindung werden aromatische Copolyamide bereitgestellt, die sich zu geformten Gebilden mit ausgezeichneten Eigenschaften, insbesondere außerordentlich hohen Anfangsmoduli und Zugfestigkeiten, verarbeiten lassen und die sich durch eine gute Löslichkeit in organischen Lösungsmitteln auszeichnen.

Die vorliegende Erfindung betrifft aromatische Copolyamide enthaltend die wiederkehrenden Struktureinheiten der Formeln I, II und III

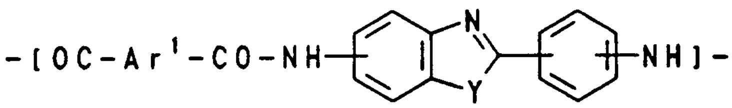 (I),

-[OC-$Ar^2$-CO-NH-$Ar^3$-NH]- (II), und

-[OC-$Ar^4$-CO-NH-$Ar^5$-NH]- (III),

worin $Ar^1$, $Ar^2$, $Ar^3$ und $Ar^4$ unabhängig voneinander zweiwertige aromatische Reste bedeuten, deren Valenzbindungen sich in para-Stellung oder in einer zu dieser Stellung vergleichbaren koaxialen oder parallelen Stellung zueinander befinden,
$Ar^5$ einen von $Ar^3$ unterschiedlichen zweiwertigen aromatischen Rest darstellt, dessen Valenzbindungen sich in para-Stellung oder in einer zu dieser Stellung vergleichbaren koaxialen oder parallelen Stellung zueinander befinden, oder $Ar^5$ einen zweiwertigen aromatischen Rest darstellt, dessen Valenzbindungen sich in meta-Stellung oder in einer zu dieser Stellung vergleichbaren gewinkelten Stellung zueinander befinden,
Y -O-, -S- oder -$NR^1$- bedeutet, worin $R^1$ ein einwertiger organischer Rest oder insbesondere Wasserstoff ist, und
$Ar^1$, $Ar^2$, $Ar^3$, $Ar^4$ und $Ar^5$ unabhängig voneinander gegebenenfalls mit ein oder zwei gegenüber Carbonsäurechloriden inerten Resten substituiert sind.

Bedeuten irgendwelche Substituenten in $Ar^1$ bis $Ar^5$ gegenüber Carbonsäurechloriden inerte Reste, so kann es sich dabei um einwertige anorganische Reste, wie Halogen, oder um einwertige, organische Reste, wie Alkyl, Alkoxy, Bis-(N-Alkyl)-amino, Bis-(N-alkyl)-amido oder Nitril handeln. Der Begriff "inerter Rest" bedeutet, daß diese Substituenten unter den Herstellungs- und Verarbeitungsbedingungen der erfindungsgemäßen Copolyamide nicht reagieren.

Bevorzugte inerte Reste sind Chlor oder $C_1$-$C_6$-Alkyl oder $C_1$-$C_6$-Alkoxy.

Besonders bevorzugte inerte Reste sind Chlor, Methoxy oder Methyl.

Bedeuten irgendwelche Reste zweiwertige aromatische Reste, deren Valenzbindungen sich in para- oder in vergleichbarer koaxialer oder paralleler Stellung zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert oder über C-C-Bindungen oder über eine -CO-NH-Gruppe linear miteinander verbunden sein.

Die Valenzbindungen, die in koaxialer oder paralleler zueinander befindlicher Stellung stehen, sind entgegengesetzt gerichtet. Ein Beispiel für koaxiale, entgegengesetzt gerichtete Bindungen sind die Diphenyl-4,4'-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Stellung zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C-Bindung verknüpfte aromatische Reste mit koaxialen, entgegengesetzt gerichteten Bindungen insbesondere 4,4'-Biphenylen.

Bevorzugte Reste dieses Typs sind 1,4-Phenylen und 2-Chlor-1,4-phenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, -$CH_2$-, -CO-NH-, -S-, -CO- oder -$SO_2$- miteinander verknüpft sein.

Beispiele für mehrkernige aromatische Reste, deren Valenzbindungen sich in zur meta-Position vergleichbaren gewinkelten Position befinden, sind
1,6-Naphthylen,
2,7-Naphthylen oder 3,4'-Biphenylen.

Ein bevorzugtes Beispiel für einen einkernigen aromatischen Rest dieses Typs ist 1,3-Phenylen.

Die erfindungsgemäßen Polyamide können unsubstituierte Reste und substituierte Reste nebeneinander in wechselnden Anteilen enthalten.

Dabei kann das Polyamid eine Art oder mehrere Arten substituierter Reste $Ar^1$ bis $Ar^9$ enthalten; z.B. kann es ausschließlich methylsubstituierte Reste oder es kann Anteile von Resten mit verschiedenen Alkylsubstituenten und/oder mit Halogensubstituenten enthalten.

Die erfindungsgemäßen Polyamide können aber auch ausschließlich unsubstituierte oder substituierte Reste $Ar^1$ bis $Ar^5$ enthalten. Bevorzugt werden solche erfindungsgemäßen Polyamide, die nur unsubstituierte oder die bis zu ca. 30 Mol-% substituierte Reste, bezogen auf das Polymere, enthalten.

$Ar^1$, $Ar^2$ und $Ar^4$ sind vorzugsweise 1,4-Phenylen.

$Ar^3$ ist vorzugsweise 1,4-Phenylen oder ein zweiwertiger von 4,4'-Diaminobenzanilid abgeleiteter Rest.

$Ar^5$ ist inbesondere ein Rest der Formel IV

$$-Ar^6-X-Ar^7- \quad (IV),$$

worin $Ar^6$ und $Ar^7$ unabhängig voneinander einen zweiwertigen aromatischen Rest darstellen, dessen Valenzbindungen sich in para-Stellung oder in einer zu dieser Stellung vergleichbaren koaxialen oder parallelen Stellung zueinander befinden, oder worin $Ar^7$ zusätzlich einen zweiwertigen aromatischen Rest darstellt, dessen Valenzbindungen sich in meta-Stellung oder in einer zu dieser Stellung vergleichbaren gewinkelten Stellung zueinander befinden, und worin $Ar^6$ und $Ar^7$ unabhängig voneinander gegebenenfalls mit ein oder zwei gegenüber Carbonsäurechloriden inerten Resten substituiert sind, und X eine direkte C-C-Bindung oder eine Gruppe der Formel -O-, -S-, $-SO_2-$, -O-Phenylen-O- oder Alkylen bedeutet.

In einer weiteren bevorzugten Form der Erfindung kann $Ar^3$ ebenfalls ein Rest der Formel IV sein, welcher sich im Einzelfall vom jeweils gewählten Rest $Ar^5$ unterscheidet.

Y ist vorzugsweise -S- oder -O-, besonders bevorzugt aber -NH-.

Bei $R^1$ kann es sich um einen beliebigen einwertigen organischen Rest handeln, solange dieser unter den Herstellungs- und Verarbeitungsbedingungen des Copolymeren inert ist. Beispiele für $R^1$ sind Alkyl-, Cycloalkyl-, Aryl- oder Aralkylreste, vorzugsweise $C_1$-$C_6$ Alkyl, insbesondere Methyl und ganz besonders bevorzugt Wasserstoff.

Die erfindungsgemäßen Copolyamide sind üblicherweise in organischen Lösungsmitteln, wie organischen polaren und aprotischen Lösungmitteln gut löslich. Unter guter Löslichkeit wird hier eine Löslichkeit von mindestens 4 g Polymer in 100 ml Lösungsmittel (bei 25° C) verstanden.

Besonders bevorzugt setzt man bei der Herstellung und/oder Verarbeitung der erfindungsgemäßen Copolyamide Lösungsmittel vom Amidtyp ein, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff.

Dabei sind vorzugsweise N-Methyl-2-pyrrolidon, N,N-Dimethylacetamid und eine Mischung dieser Verbindungen von Bedeutung.

Bevorzugt werden aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ 1,4-Phenylen oder ein zweiwertiger Rest des 4,4'-Diaminobenzanilids ist, $Ar^5$ einen Rest der oben definierten Formel IV bedeutet, $Ar^6$ ein gegebenenfalls mit einem gegenüber Carbonsäurechloriden inerten Rest substituiertes 1,4-Phenylen bedeutet, $Ar^7$ ein gegebenenfalls mit einem gegenüber Carbonsäurechloriden inerten Rest substituiertes 1,4-Phenylen oder 1,3-Phenylen bedeutet, und X eine direkte C-C-Bindung, -O-, $-CH_2-$ oder -O-1,4-Phenylen-O-darstellt.

Ganz besonders bevorzugt werden aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ 1,4-Phenylen oder ein zweiwertiger Rest des 4,4'-Diaminobenzanilids ist, $Ar^5$ einen Rest der oben definierten Formel IV bedeutet, $Ar^6$ 1,4-Phenylen bedeutet, $Ar^7$ 1,3-Phenylen bedeutet, und X -O-darstellt, und worin vorzugsweise die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-50 Mol%,
wiederkehrende Struktureinheit der Formel II: 20-60 Mol%, und
wiederkehrende Struktureinheit der Formel III: 20-50 Mol%.

Ganz besonders bevorzugt werden aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ 1,4-Phenylen oder ein zweiwertiger Rest des 4,4'-Diaminobenzanilids ist, $Ar^5$ einen Rest der oben definierten Formel IV bedeutet, $Ar^6$ und $Ar^7$ 1,4-Phenylen bedeuten und X -O-1,4-Phenylen-O-darstellt und worin vorzugsweise die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-60 Mol%,
wiederkehrende Struktureinheit der Formel II: 20-40 Mol%, und
wiederkehrende Struktureinheit der Formel III: 10-40 Mol%.

Ganz besonders bevorzugt werden aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ 1,4-Phenylen oder ein zweiwertiger Rest des 4,4'-Diaminobenzanilids ist, $Ar^5$ einen Rest der oben definierten Formel IV bedeutet, $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten und X eine direkte C-C-Bindung darstellt und worin vorzugsweise die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-70 Mol%, insbesondere 30-60 Mol%,
wiederkehrende Struktureinheit der Formel II: 10-60 Mol%, insbesondere 10-30 Mol%, und
wiederkehrende Struktureinheit der Formel III: 20-60 Mol%, insbesondere 30-60 Mol%.

Bevorzugt werden ferner aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ einen Rest der oben definierten Formel IV bedeutet, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten, X eine direkte C-C-Bindung darstellt, $Ar^5$ einen Rest der oben definierten Formel IV bedeutet, worin $Ar^6$ ein gegebenenfalls mit einem gegenüber Carbonsäurechloriden inerten Rest substituiertes 1,4-Phenylen bedeutet, $Ar^7$ ein gegebenenfalls mit einem gegenüber Carbonsäurechloriden inerten Rest substituiertes 1,4-Phenylen oder 1,3-Phenylen bedeutet, und X -O-, $-CH_2-$ oder -O-1,4-Phenylen-O- darstellt.

Ganz besonders bevorzugt werden aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ einen Rest der oben definierten Formel IV bedeutet, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten, X eine direkte C-C-Bindung darstellt, $Ar^5$ einen Rest der oben definierten Formel IV bedeutet, worin $Ar^6$ 1,4-Phenylen bedeutet, $Ar^7$ 1,3-Phenylen bedeutet, und X -O- darstellt und worin vorzugsweise die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-60 Mol%,
wiederkehrende Struktureinheit der Formel II: 20-50 Mol%, und
wiederkehrende Struktureinheit der Formel III: 20-40 Mol%.

Ganz besonders bevorzugt werden aromatische Copolyamide enthaltend die wiederkehrenden Struktureinheiten der Formeln I, II und III, worin $Ar^1$, $Ar^2$ und $Ar^4$ 1,4-Phenylen bedeuten, $Ar^3$ einen Rest der oben definierten Formel IV bedeutet, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten, X eine direkte C-C-Bindung darstellt, $Ar^5$ einen Rest der oben definierten Formel IV bedeutet, worin $Ar^6$ und $Ar^7$ 1,4-Phenylen bedeuten und X -O-1,4-Phenylen-O- darstellt und worin vorzugsweise die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-60 Mol%,
wiederkehrende Struktureinheit der Formel II: 20-50 Mol%, und
wiederkehrende Struktureinheit der Formel III: 20-40 Mol%.

Eine weitere bevorzugte Ausführungsform der Erfindung betrifft aromatische Copolyamide enthaltend die wiederkehrenden Struktureinheiten der Formeln I, II, III und V

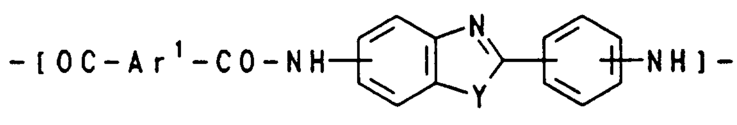

(I),

$-[OC-Ar^2-CO-NH-Ar^3-NH]-$ (II),

$-[OC-Ar^4-CO-NH-Ar^5-NH]-$ (III), und

-[OC-$Ar^8$-CO-NH-$Ar^9$-NH]- (V), und

worin $Ar^1$, $Ar^2$, $Ar^3$, $Ar^4$ und $Ar^8$ unabhängig voneinander zweiwertige aromatische Reste bedeuten, deren Valenzbindungen sich in para-Stellung oder in einer zu dieser Stellung vergleichbaren koaxialen oder parallelen Stellung zueinander befinden, Y die weiter oben definierte Bedeutung besitzt, und $Ar^5$ und $Ar^9$ jeweils voneinander unterschiedliche Reste der Formel IV bedeuten

- $Ar^6$-X-$Ar^7$- (IV),

worin $Ar^6$, $Ar^7$ und X die weiter oben definierte Bedeutung aufweisen.

Bevorzugt werden aromatische Copolyamide enthaltend die wiederkehrenden Struktureinheiten der Formeln I, II, III und V, worin $Ar^1$, $Ar^2$, $Ar^4$ und $Ar^8$ 1,4-Phenylen bedeuten, $Ar^3$ 1,4-Phenylen oder ein zweiwertiger Rest des 4,4'-Diaminobenzanilids ist, $Ar^6$ 1,4-Phenylen bedeutet, das gegebenenfalls mit einem gegenüber Carbonsäurechloriden inerten Rest, insbesondere mit Methyl, Methoxy oder Chlor, substituiert ist, $Ar^7$ 1,4-Phenylen oder 1,3-Phenylen darstellt, das gegebenenfalls mit einem gegenüber Carbonsäurechloriden inerten Rest, insbesondere mit Methyl, Methoxy oder Chlor, substituiert ist, und X eine direkte C-C-Bindung, -O-, -$CH_2$- oder -O-1,4-Phenylen-O- ist.

Ganz besonders bevorzugt werden aromatische Copolyamide enthaltend die wiederkehrenden Struktureinheiten der Formeln I, II, III und V, worin $Ar^1$, $Ar^2$, $Ar^4$ und $Ar^8$ 1,4-Phenylen bedeuten, $Ar^3$ 1,4-Phenylen oder ein zweiwertiger Rest des 4,4'-Diaminobenzanilids ist, $Ar^5$ ein Rest der Formel IV ist, worin $Ar^6$ und $Ar^7$ 1,4-Phenylen darstellen und X -O-1,4-Phenylen-O- bedeutet und $Ar^9$ ein Rest der Formel IV ist, worin $Ar^6$ 1,4-Phenylen ist, $Ar^7$ 1,3-Phenylen bedeutet und X -O- ist, worin insbesondere die Mengenanteile der wiederkehrenden Struktureinheiten der Formeln I bis III und V sich innerhalb folgender Bereiche, bezogen auf die Gesamtmenge dieser Struktureinheiten bewegen:
wiederkehrende Struktureinheit der Formel I: 1-15 Mol%,
wiederkehrende Struktureinheit der Formel II: 40-60 Mol%,
wiederkehrende Struktureinheit der Formel III: 1-30 Mol%, und
wiederkehrende Struktureinheit der Formel V: 15-45 Mol%.

Ganz besonders bevorzugt werden aromatische Copolyamide enthaltend die wiederkehrenden Struktureinheiten der Formeln I, II, III und V, worin $Ar^1$, $Ar^2$, $Ar^4$ und $Ar^8$ 1,4-Phenylen bedeuten, $Ar^3$ 1,4-Phenylen oder ein zweiwertiger Rest des 4,4'-Diaminobenzanilids ist, $Ar^5$ ein Rest der Formel IV ist, worin $Ar^6$ und $Ar^7$ 1,4-Phenylen darstellen und X -O-1,4-Phenylen-O- bedeutet und $Ar^9$ ein Rest der Formel IV ist, worin $Ar^6$ und $Ar^7$ jeweils mit einem gegenüber Carbonsäurechloriden inerten Rest, insbesondere mit Methyl, Methoxy oder Chlor, substituiertes 1,4-Phenylen bedeuten und X eine direkte C-C-Bindung ist, worin insbesondere die Mengenanteile der wiederkehrenden Struktureinheiten der Formeln I bis III und V sich innerhalb folgender Bereiche, bezogen auf die Gesamtmenge dieser Struktureinheiten bewegen:
wiederkehrende Struktureinheit der Formel I: 1-15 Mol%,
wiederkehrende Struktureinheit der Formel II: 10-40 Mol%,
wiederkehrende Struktureinheit der Formel III: 10-35 Mol%, und
wiederkehrende Struktureinheit der Formel V: 30-60 Mol%.

Ganz besonders bevorzugt werden aromatische Copolyamide enthaltend die wiederkehrenden Struktureinheiten der Formeln I, II, III und V, worin $Ar^1$, $Ar^2$, $Ar^4$ und $Ar^8$ 1,4-Phenylen bedeuten, $Ar^3$ 1,4-Phenylen oder ein zweiwertiger Rest des 4,4'-Diaminobenzanilids ist, $Ar^5$ ein Rest der Formel IV ist, worin $Ar^6$ und $Ar^7$ jeweils mit einem gegenüber Carbonsäurechloriden inerten Rest, insbesondere mit Methyl, Methoxy oder Chlor, substituiertes 1,4-Phenylen bedeuten und X eine direkte C-C-Bindung ist, und $Ar^9$ ein Rest der Formel IV ist, worin $Ar^6$ 1,4-Phenylen ist, $Ar^7$ 1,3-Phenylen bedeutet und X -O- ist, worin insbesondere die Mengenanteile der wiederkehrenden Struktureinheiten der Formeln I bis III und V sich innerhalb folgender Bereiche, bezogen auf die Gesamtmenge dieser Struktureinheiten bewegen:
wiederkehrende Struktureinheit der Formel I: 1-15 Mol%,
wiederkehrende Struktureinheit der Formel II: 10-40 Mol%,
wiederkehrende Struktureinheit der Formel III: 30-60 Mol%, und
wiederkehrende Struktureinheit der Formel V: 10-35 Mol%.

Zur Herstellung der erfindungsgemäßen Copolyamide enthaltend die wiederkehrenden Struktureinheiten I, II, III bzw. I, II, III und V setzt man zweckmäßigerweise ein Dicarbonsäuredichlorid der Formel VI oder eine Mischung derartiger Dicarbonsäuredichloride mit einem Gemisch der Diamine der Formeln VII, VIII und IX bzw. VII, VIII, IX und X um

ClOC-$Ar^1$-COCl (VI),

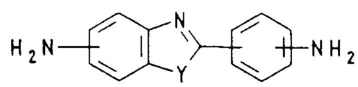

(VII),

$H_2N\text{-}Ar^3\text{-}NH_2$ (VIII), $H_2N\text{-}Ar^5\text{-}NH_2$ (IX), $H_2N\text{-}Ar^9\text{-}NH_2$ (X),

Dabei besitzen $Ar^1$ bis $Ar^9$ und Y die weiter oben definierte Bedeutung.

Die Verbindungen der Formeln VI bis X sind an sich bekannt.

Die Mengenverhältnisse der Diamine VII, VIII und IX bzw. VII, VIII, IX und X sind dabei jeweils so zu wählen, daß dabei in organischen Lösungsmitteln lösliche Polyamide, insbesondere die Verbindungen mit den oben als bevorzugt definierten Mengenanteilen an Struktureinheiten der Formeln I bis III bzw. I bis IV entstehen.

Es ist für den Fachmann selbstverständlich, daß die Summe aller von aromatischen Säuren abgeleiteten Struktureinheiten und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von aromatischen Säuren zu aromatischen Aminen steuern. Diese Auswahlkriterien sind dem Fachmann auf dem Gebiet der Polykondensation bekannt.

Beispiele für geeignete aromatische Dicarbonsäuren, von denen sich die Dicarbonsäuredichloride der Formel VI ableiten, sind Naphthalin-1,4-dicarbonsäure, Naphthalin-1,5-dicarbonsäure, Naphthalin-2,6-dicarbonsäure, Biphenyl-4,4'-dicarbonsäure, 2-Chlorterephthalsäure, 2-Bromterephthalsäure, 2-Methylterephthalsäure und insbesondere Terephthalsäure.

Als Diamin der Formel VII setzt man beispielsweise Diamino-2-phenyl-benzoxazol,Diamino-2-phenylbenzthiazol oder vorzugsweise Diamino-2-phenyl-benzimidazol ein. Davon werden insbesondere die 5,4'- bzw. 6,4'-Isomeren bevorzugt. Ganz besonders bevorzugt setzt man 5(6)-Amino-2-(p-aminophenyl)-benzimidazol ein.

Als Diamin der Formel VIII setzt man beispielsweise 4,4'-Diaminobenzanilid, 2-Chlor-p-phenylendiamin und bevorzugt p-Phenylendiamin ein.

Als Diamin der Formel IX bzw. Diamine der Formel X setzt man vorzugsweise 1,4-Bis-(4-aminophenoxy)-benzol, 3,4'-Diaminodiphenylether, 3,3'-Dimethylbenzidin, 3,3'-Dimethoxybenzidin oder 3,3'-Dichlorbenzidin ein.

Die Copolykondensation der oben beschriebenen monomeren Verbindungen wird im allgemeinen als Lösungspolykondensation ausgeführt.

Dazu werden die miteinander umzusetzenden aromatischen monomeren Verbindungen in der Regel in einem organischen Lösungsmittel gelöst. Das organische Lösungsmittel enthält dabei vorzugsweise zumindest ein Lösungsmittel vom Amidtyp, wie weiter oben beschrieben.

Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolymerisation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Copolymerisation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Copolymerisationsmischung vor, während oder nach der Copolymerisation zugesetzt wird.

Beispiele für solche Zusatzstoffe sind Alkalimetallhalogenide, wie Lithiumchlorid oder Erdalkalimetallhalogenide, wie Calciumchlorid.

Die Polykondensationstemperaturen liegen bei der Lösungspolymerisation üblicherweise zwischen -20 °C und + 120 °C, bevorzugt zwischen + 10 °C und + 100 °C. Besonders gute Ergebnisse werden bei Reaktionstemperaturen zwischen +10 °C und +80 °C erzielt.

Die Summe der Konzentrationen der aromatischen monomeren Verbindungen in der Polymerisationsgemischlösung kann unter Beachtung des gewünschten Polymerisationsgrades, der gewünschten Viskosität

des Polymerisationsgemisches, der Art der verwendeten aromatischen monomeren Verbindungen, der Art des verwendeten Lösungsmittels und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Polykondensationsreaktionen werden vorzugsweise so ausgeführt, daß nach Abschluß der Reaktion 4 bis 20, vorzugsweise 5 bis 10 Gew.-% an Polykondensat in der Lösung vorliegen.

Im Verlauf der Polykondensation wächst das Molekulargewicht des Polymers und damit auch die Viskosität des Reaktionsansatzes an.

Eine ausreichende Molekül-Kettenlänge ist beispielsweise erreicht, wenn die Viskosität der bei der Polykondensation erhaltenen Polymerlösung einer inhärenten Viskosität des Polymers von mehr als 2,5 dl/g, vorzugsweise 3,5 bis 9,0 dl/g, entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung bestimmt an 0,25 %igen Lösungen von Polymer in N-Methylpyrrolidon bei 25 °C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und salzartig an das Amidlösungsmittel gebundene Chlorwasserstoff durch Zugabe basischer Substanzen neutralisiert werden.

Geeignet sind dafür beispielsweise Lithiumhydroxyd, Calciumhydroxyd, insbesondere aber Calciumoxid.

Das bei Durchführung des erfindungsgemäßen Verfahrens erhaltene aromatische Copolyamid kann aus dem Copolymerisationsgemisch durch ein Trennverfahren abgeschieden werden, beispielsweise durch Präzipitation. Zur Herstellung einer Lösung für das Ausformen des Copolyamids wird das so gewonnene aromatische Copolyamid dann in einem geeigneten organischen Lösungsmittel gelöst, wobei dieses Verfahren als Auflösungsverfahren zur Herstellung der Ausformlösung bezeichnet wird.

In den Fällen, in denen zur Herstellung des aromatischen Copolyamids gemäß der Erfindung das Verfahren der Lösungspolymerisation angewandt wird, wird das Copolyamid, weil es in dem Lösungsmittel für die Polymerisation hervorragend löslich ist, in diesem jedoch vollständig gelöst. Daher ist es bei industriellem Einsatz des erfindungsgemäßen Verfahrens vorteilhaft, daß bei der Polymerisation erhaltene Gemisch sofort als Ausformlösung für das aromatische Copolyamid zu verwenden.

Das aromatische Copolyamid gemäß der Erfindung ist in einem organischen Lösungsmittel, beispielsweise in organischen Lösungsmitteln vom Amidtyp hervorragend löslich und besitzt eine hervorragende Wärmebeständigkeit und eine überlegene chemische Widerstandsfähigkeit. Das erfindungsgemäße aromatische Copolyamid ist besonders nützlich für die Herstellung von verschiedenen geformten Artikeln, beispielsweise Fasern, Filmen und Beschichtungen, die ebenfalls ein Gegenstand der Erfindung sind.

Der Begriff "Fasern" ist im Rahmen dieser Beschreibung in seiner breitesten Bedeutung zu verstehen; dazu zählen also zum Beispiel Filamente oder Stapelfasern beliebiger Titer.

Der Begriff "Filme" ist im Rahmen dieser Beschreibung ebenfalls in seiner breitesten Bedeutung zu verstehen; dazu zählen also zum Beispiel Ausführungsformen unterschiedlicher Stärke, wie Folien oder Membranen.

Diese Gebilde besitzen nicht nur eine hervorragende Wärmebeständigkeit und chemische Beständigkeit, sondern weisen auch überlegene mechanische Eigenschaften auf, insbesondere hinsichtlich der Zugfestigkeit, der Flammfestigkeit (hohe LOI-Werte) und des Elastizitätsmoduls. Die Lösung des aromatischen Copolyamids kann ebenfalls auf unterschiedliche Weise verwendet werden, beispielsweise zur Produktion von Fasern, Folien, blattförmigen Elementen, Faserstoffen und anderen geformten Artikeln.

Die Erfindung betrifft daher auch geformte Gebilde, insbesondere Filme und Fasern, aus den oben definierten aromatischen Polyamiden.

In einer besonders bevorzugten Ausführungsform der Erfindung handelt es sich bei den geformten Gebilden um Fasern, die eine Zugfestigkeit von mehr als 100 cN/tex, insbesondere 150 bis 290 cN/tex und einen Anfangsmodul, bezogen auf 100 % Dehnung, von mehr als 50 N/tex, insbesondere 100 bis 150 N/tex, aufweisen.

Ein weiterer Gegenstand der Erfindung ist ein Verfahren zur Herstellung von geformten Gebilden, insbesondere von Fasern, aus den oben definierten aromatischen Polyamiden. Das Verfahren umfaßt die Maßnahmen:

i) Herstellen einer Ausformlösung enthaltend ein organisches Lösungsmittel und mindestens 2 Gew.-%, insbesondere 4 bis 20 Gew.-%, bezogen auf die Lösung, eines aromatischen Polyamids wie oben definiert,

ii) Extrudieren der Ausformlösung durch eine Ausformdüse in eine Lösungsmittelentfernungsvorrichtung, worin das organische Lösungsmittel zumindest zum Teil aus den entstandenen geformten Gebilden entfernt wird und wobei Primärgebilde entstehen, die die für die folgende Weiterverarbeitung ausreichende mechanische Stabilität aufweisen, wobei gegebenenfalls verstreckt wird,

iii) gegebenenfalls Waschen und/oder Verstreckung der Primärgebilde,

iv) Trocknen der Primärgebilde, und

v) Behandlung der getrockneten geformten Gebilde bei Temperaturen von 300 bis 500 °C, gegebenenfalls unter Nachverstreckung, so daß sich die Festigkeit der geformten Gebilde um mindestens 10 %, vorzugsweise mehr als 50 %, bezogen auf die vor der Behandlung vorliegende Festigkeit, erhöht.

Bei dem Verfahren zum Herstellen der Ausformlösung des aromatischen Copolyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Für die Herstellung der Ausformlösung ist es vorteilhaft, wenn die Konzentration des aromatischen Copolyamids in einem Bereich zwischen 2 und 20 Gew.-% gehalten wird. Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Kalziumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur.

Die Ausformlösung weist vorzugsweise eine Viskosität von mindestens 30 Pa*sec bei 25 °C auf.

Das Ausformen der Ausformlösung zu einem geformten Artikel kann nach jedem geeigneten Trockenverfahren, Naßverfahren oder Trocken-Naßverfahren erfolgen. In den Fällen, in denen ein Naßverfahren angewandt wird, um die Ausformlösung beispielsweise zu Filamenten auszuformen, wird die Ausformlösung oder - in diesem Fall - die Spinnlösung durch eine Düse, beispielsweise eine Spinndüse, in eine koagulierende Flüssigkeit extrudiert. Das Ausformen erfolgt vorzugsweise bei einer Temperatur zwischen 25 und 100 °C.

Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des aromatischen Copolyamids verwendet werden.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0 °C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration zwischen 70 Gew.-% und weniger vor, insbesondere zwischen 50 Gew.-% und weniger.

Das vorstehend erläuterte Ausformverfahren ist besonders für die Herstellung von Filmen oder Fasern aus einer Ausformlösung geeignet.

Bei der Herstellung von Fasern aus dem aromatischen Copolyamid wird die Ausform- bzw. Spinnlösung durch einen Spinnkopf mit mehreren Spinnöffnungen extrudiert, wobei die filamentförmigen Ströme der Spinnlösung in einer der oben angegebenen Koagulationsflüssigkeiten verfestigt werden (Naßverfahren) oder in einer die Verdampfung fördernden Atmosphäre (Trockenverfahren). Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt. Eine ebenfalls geeignete Variante ist das sogenannte "Trockendüsen-Naßspinnverfahren", wie es z.B. in der US-A-34 14 645 beschrieben ist.

Beim Naßspinnen eines aromatischen Copolyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filamente des aromatischen Copolyamids in ein Wasserbad eingeleitet werden, welches auf einer Temperatur zwischen 0 und 100 °C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße aromatische Copolyamid unter Verwendung üblicher Spinnverfahren und -vorrichtungen ohne weiteres zu Filamenten verarbeitet werden kann, ohne daß ein gefährliches oder schädliches Lösungsmittel, wie z.B. konzentrierte Schwefelsäure, verwendet werden müßte.

Hierdurch werden die Gefahren für das Bedienungspersonal verringert. Außerdem haben die aus dem erfindungsgemäßen Copolyamid hergestellten Filamente eine dichte interne Struktur.

Die Ausformlösung kann auch unter Verwendung üblicher Auffächerungs- oder Extrudierverfahren zu einem Film bzw. einer Folie verarbeitet werden.

Fasern oder Filme, die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Filamente oder Folien.

Filamente aus den erfindungsgemäßen aromatischen Copolyamiden werden in der Regel verstreckt, um eine hohe mechanische Festigkeit und einen hohen Elastizitätsmodul zu erzielen. Das Verstreckungsverhältnis beträgt dabei üblicherweise etwa 3 bis 10. Die Verstrecktemperatur liegt dabei in der Regel zwischen 350 bis 550 °C, insbesondere zwischen 400 und 480 °C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente oder Folien einer weiteren Wärmebehandlung bei gleicher oder höherer Temperatur unterworfen werden, um ihre kristalline Struktur zu fördern.

Ganz besonders bevorzugt werden die Schritte i) bis v) des erfindungsgemäßen Verfahrens kontinuierlich ausgeführt.

Nach der Trocknung der geformten Gebilde werden diese einer Temperung unterworfen. Dieser Schritt dient zur Verbesserung der mechanischen Eigenschaften, beispielsweise zur Erhöhung von Zugfestigkeit und Elastizitätsmodul. Dabei können diese Werte beispielsweise um mehr als 100 %, bezogen auf das Ausgangsmaterial, ansteigen.

Besonders bevorzugt wird ein Verfahren zur Herstellung von Fasern, worin die erhaltenen Fasern nach Schritt iv) aufgespult werden und die aufgespulten Fasern einer Hitzebehandlung, vorzugsweise einer Trockenhitzebehandlung, in Schritt v) separat unterzogen werden.

Besonders bevorzugt wird weiterhin ein Verfahren zur Herstellung von Fasern, worin die Hitzebehandlung in Schritt v) in zwei Schritten durchgeführt wird, wobei der erste Schritt ein Erhitzen der Fäden auf Temperaturen von 300 bis 400 °C, insbesondere von 320 bis 370 °C, und der zweite Schritt ein Erhitzen der Fäden auf Temperaturen von 400 bis 550 °C, insbesondere von 430 bis 480 °C, beinhaltet.

Die Hitzebehandlung kann in einer oxidierenden oder in einer nicht-oxidierenden Atmosphäre vorgenommen werden, vorzugsweise erfolgt die Temperung in Luft. Die erfindungsgemäßen Fasern weisen üblicherweise Einzelfilamenttiter von 1-10 dtex, vorzugsweise von 1,5-6,0 dtex, auf.

Versuche haben gezeigt, daß die Herstellung von geformten Gebilde aus Ausformlösungen enthaltend organische Lösungsmittel anstelle von konzentrierter Schwefelsäure und enthaltend aromatische Polyamide enthaltend die wiederkehrende Struktureinheit der oben definierten Formel I

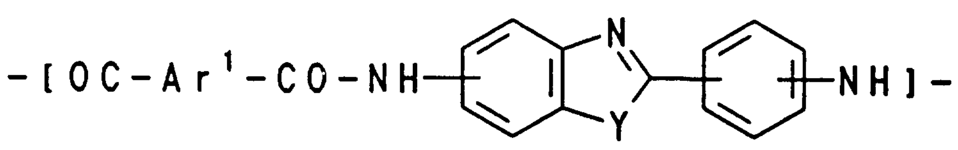

(I),

worin Y -O- oder $-NR^1-$ bedeutet, zu Produkten führt, die sich durch einen geringen Schwefelgehalt auszeichnen. Die erhaltenen Produkte zeichnen sich durch eine herabgesetzte Hydrolyseneigung aus.

Die Erfindung betrifft daher auch geformte Gebilde aus aromatischen Polyamiden enthaltend die wiederkehrende Struktureinheit Formel I, die dadurch gekennzeichnet sind, daß diese geformten Gebilde einen Gehalt an Schwefel von weniger als 0,1 Gew.-%, bezogen auf die Trockenmasse der geformten Gebilde, aufweisen.

Zu den bevorzugten faser- und filmbildenden aromatischen Polyamiden, welche bei dieser Ausführungsform der Erfindung zum Einsatz kommen können, zählen aromatische Polyamide bestehend aus den wiederkehrenden Struktureinheiten der Formel I, beispielsweise ein von Terephthalsäure oder deren polyamidbildenden Derivaten und von 5(6)-Amino-2-(p-aminophenyl)-benzimidazol abgeleitetes aromatisches Polyamid; oder aromatische Copolyamide bestehend aus den wiederkehrenden Struktureinheiten der Formeln I und II, beispielsweise ein von Terephthalsäure oder deren polyamidbildenden Derivaten und von Diamino-2-phenyl-benzimidazol und para-Phenylendiamin abgeleitetes aromatisches Polyamid; oder aromatische Polyamide bestehend aus den wiederkehrenden Struktureinheiten der Formeln I, II und gegebenenfalls III beispielsweise ein von Terephthalsäure oder deren polyamidbildenden Derivaten und von Diamino-2-phenyl-benzimidazol, para-Phenylendiamin und 3,4'-Diaminodiphenylether oder 1,4-Bis-(4-aminophenyloxy)-benzol oder 3,3'-Dimethylbenzidin abgeleitetes aromatisches Polyamid.

Die Fasern aus einem aromatischen Polyamid gemäß der Erfindung, welche hervorragende mechanische und thermische Eigenschaften besitzen und sich durch eine hohe Verstreckbarkeit auszeichnen, können auf die verschiedenste Weise industriell eingesetzt werden, beispielsweise zur Verstärkung von Kunststoffen, insbesondere als Verstärkungsmaterialien für die Gewebeeinlagen von Gummiartikeln, als wärmebeständige Isolationsmaterialien, zur Herstellung von Filtergeweben, als leichte Dämmstoffe und zur Herstellung von Schutzkleidung.

Filme aus einem aromatischen Copolyamid gemäß der Erfindung können als wärmebeständige elektrische Isolationsmaterialien oder zur Herstellung von Membranen eingesetzt werden.

Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Beispiel 1

Aromatisches Copolyamid aus 100 mol % Terephthalsäuredichlorid (TPC), 40 mol % Diamino-2-phenylbenzimidazol (DABI), 40 mol % para-Phenylendiamin (PPD) und 20 mol % 3,4'-Diaminodiphenylether (DADPE)

85,23 g (0,38 mol) DABI, 41,04g (0,38 mol) PPD und 38,04g (0,19 mol) DADPE wurden in 4036 g N-Methylpyrrolidon (NMP) gelöst und bei 14°C mit 190,84 g (0,94 mol) TPC versetzt. Die gewünschte Viskosität wurde durch Zugabe der Restmenge von 2,03 g (0,01 mol) TPC in kleinen Schritten eingestellt. Bei Erreichen der gewünschten Viskosität (inhärente Viskosität von 5,5 dl/g) wurde die Polykondensation mit 70,3 g Calciumhydroxid neutralisiert. Die Lösung wurde bei 80°C nachgerührt. Die Lösung enthielt 6 Gew. % Aramid und wurde filtriert, entgast und naß versponnen. Dazu wurde sie aus einer Düse mit 100 Öffnungen von jeweils 0,15 mm Durchmesser über einen Luftspalt in ein Koagulationsbad, bestehend aus einer 50°C warmen Lösung von 35 % NMP in Wasser mit einer Geschwindigkeit von 16 m/min ausgesponnen. Die erhaltenen Fäden wurden durch zwei Wasserbäder, eine Waschmaschine, über eine Trockengalette und schließlich über Bügeleisen der Temperaturen von 470°C auf das 11-fache verstreckt.

Der Einzelfilamenttiter betrug 1,8 dtex bei einer feinheitsbezogenen Festigkeit von 210 cN/tex, einer Dehnung von 3,4 % und einem Anfangsmodul von 85 N/tex, bezogen auf 100 % Dehnung.

Beispiele 2 bis 8

Analog zur Herstellungsvorschrift wurden weitere Aramide hergestellt und naß versponnen. Die chemische Zusammensetzung der hergestellten Aramide, die Herstellungs- und Verarbeitungsbedingungen und die Eigenschaften der erhaltenen Fäden sind in der folgenden Tabelle aufgeführt. Dabei werden für die eingesetzten Monomere folgende Abkürzungen verwendet:

| | |
|---|---|
| TPC | Terephthalsäuredichlorid |
| DABI | 5(6)-Amino-2-(p-aminophenyl)-benzimidazol |
| PPD | para-Phenylendiamin |
| DADPE | 3,4'-Diaminodiphenylether |

BAPOB 1,4-Bis-(4-aminophenyloxy)-benzol
DMB 3,3'-Dimethylbenzidin

Tabelle

| Beispiel | 2 | 3 | 4 | 5 | 6 | 7 | 8 | 9 | 10 | 11 | 12 |
|---|---|---|---|---|---|---|---|---|---|---|---|
| TPC (mol%) | 100 | 100 | 100 | 100 | 100 | 100 | 100 | 100 | 100 | 100 | 100 |
| PPD (mol%) | 40 | 30 | 30 | – | – | 50 | 25 | 20 | 25 | 25 | 25 |
| DADPE (mol%) | – | 30 | 10 | – | 20 | – | – | – | – | – | – |
| BAPOB (mol%) | – | – | – | – | 10 | 25 | 25 | – | – | – | 20 |
| DMB (mol%) | – | – | – | 40 | – | – | – | 40 | 37,5 | 40 | – |
| DABI (mol%) | 60 | 40 | 60 | 60 | 70 | 25 | 50 | 40 | 37,5 | 35 | 55 |
| Konzentration Spinnlösung (Gew.-%) | 4 | 6 | 6 | 5 | 6 | 6 | 6 | 6 | 5,5 | 6 | 6 |
| inh. Viskosität (dl/g) | 4,3 | 5,8 | 5,1 | 4,2 | 5,6 | 6,3 | 6,1 | 7,7 | 8,3 | 7,4 | 7,0 |
| Gesamttiter (dtex) | 160 | 550 | 550 | 550 | 180 | 180 | 180 | 330 | 500 | 330 | 236 |
| Reißfestigkeit (cN/tex) | 130 | 250 | 210 | 224 | 210 | 230 | 215 | 222 | 220 | 192 | 208 |
| E-Modul (N/tex) | 114 | 76 | 85 | 99 | 66 | 68 | 50 | 81 | 85 | 79 | 60 |
| Reißdehnung (%) | 1,9 | 4,5 | 3,8 | 3,5 | 3,9 | 3,4 | 3,9 | 3,0 | 2,9 | 2,7 | 4,0 |
| Verstreckung 1: | 3 | 13 | 8 | 7 | 10 | 7 | 9 | 3 | 2,5 | 2 | 7 |

**Patentansprüche**

1. Aromatische Copolyamide enthaltend die wiederkehrenden Struktureinheiten der Formeln I, II und III

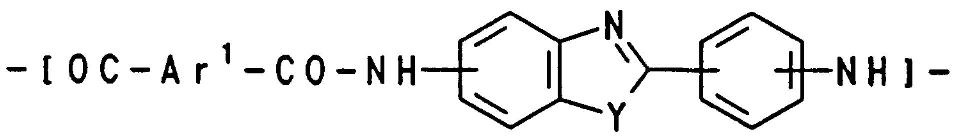 (I),

-[OC-$Ar^2$-CO-NH-$Ar^3$-NH]- (II), und

-[OC-$Ar^4$-CO-NH-$Ar^5$-NH]- (III),

worin $Ar^1$, $Ar^2$, $Ar^3$ und $Ar^4$ unabhängig voneinander zweiwertige aromatische Reste bedeuten, deren Valenzbindungen sich in para-Stellung oder in einer zu dieser Stellung vergleichbaren koaxialen oder parallelen Stellung zueinander befinden,
$Ar^5$ einen von $Ar^3$ unterschiedlichen zweiwertigen aromatischen Rest darstellt, dessen Valenzbindungen sich in para-Stellung oder in einer zu dieser Stellung vergleichbaren koaxialen oder parallelen Stellung zueinander befinden, oder $Ar^5$ einen zweiwertigen aromatischen Rest darstellt, dessen Valenzbindungen sich in meta-Stellung oder in einer zu dieser Stellung vergleichbaren gewinkelten Stellung zueinander befinden,
Y -O-, -S- oder -$NR^1$- bedeutet, worin $R^1$ ein einwertiger organischer Rest oder insbesondere Wasserstoff ist, und
$Ar^1$, $Ar^2$, $Ar^3$, $Ar^4$ und $Ar^5$ unabhängig voneinander gegebenenfalls mit ein oder zwei gegenüber Carbonsäurechloriden inerten Resten substituiert sind.

2. Aromatische Copolyamide nach Anspruch 1, dadurch gekennzeichnet, daß $Ar^1$, $Ar^2$ und $Ar^4$ 1,4-Phenylen sind.

3. Aromatische Copolyamide nach Anspruch 1, dadurch gekennzeichnet, daß $Ar^3$ 1,4-Phenylen oder ein zweiwertiger von 4,4'-Diaminobenzanilid abgeleiteter Rest ist.

4. Aromatische Copolyamide nach Anspruch 1, dadurch gekennzeichnet, daß $Ar^5$ ein Rest der Formel IV ist

- $Ar^6$-X-$Ar^7$- (IV),

worin $Ar^6$ und $Ar^7$ unabhängig voneinander einen zweiwertigen aromatischen Rest darstellen, dessen Valenzbindungen sich in para-Stellung oder in einer zu dieser Stellung vergleichbaren koaxialen oder parallelen Stellung zueinander befinden, oder worin $Ar^7$ zusätzlich einen zweiwertigen aromatischen Rest darstellt, dessen Valenzbindungen sich in meta-Stellung oder in einer zu dieser Stellung vergleichbaren gewinkelten Stellung zueinander befinden, und worin $Ar^6$ und $Ar^7$ unabhängig voneinander gegebenenfalls mit ein oder zwei gegenüber Carbonsäurechloriden inerten Resten substituiert sind, und X eine direkte C-C-Bindung oder eine Gruppe der Formel -O-, -S-, -$SO_2$-, -O-Phenylen-O- oder Alkylen bedeutet.

5. Aromatische Copolyamide nach Anspruch 4, dadurch gekennzeichnet, daß $Ar^3$ ebenfalls ein Rest der Formel IV ist, welcher sich vom jeweils gewählten Rest $Ar^5$ unterscheidet.

6. Aromatische Copolyamide nach Anspruch 1, dadurch gekennzeichnet, daß Y -S- oder -O-, besonders bevorzugt aber -NH- ist.

7. Aromatische Copolyamide nach Anspruch 1, dadurch gekennzeichnet, daß $R^1$-$C_1$-$C_6$ Alkyl, insbesondere Methyl, besonders bevorzugt Wasserstoff ist.

8. Aromatische Copolyamide nach Anspruch 1, dadurch gekennzeichnet, daß $Ar^1$, $Ar^2$ und $Ar^4$ 1,4-Phenylen bedeuten, $Ar^3$ 1,4-Phenylen oder ein zweiwertiger Rest des 4,4'-Diaminobenzanilids ist, $Ar^5$

einen Rest der in Anspruch 4 definierten Formel IV bedeutet, $Ar^6$ ein gegebenenfalls mit einem gegenüber Carbonsäurechloriden inerten Rest substituiertes 1,4-Phenylen bedeutet, $Ar^7$ ein gegebenenfalls mit einem gegenüber Carbonsäurechloriden inerten Rest substituiertes 1,4- oder 1,3-Phenylen bedeutet, und X eine direkte C-C-Bindung, -O-, $-CH_2-$ oder -O-1,4-Phenylen-O- darstellt.

**9.** Aromatische Copolyamide nach Anspruch 8, dadurch gekennzeichnet, daß $Ar^6$ 1,4-Phenylen bedeutet, $Ar^7$ 1,3-Phenylen bedeutet, und X -O- darstellt.

**10.** Aromatische Copolyamide nach Anspruch 9, dadurch gekennzeichnet, daß die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-50 Mol%,
wiederkehrende Struktureinheit der Formel II: 20-60 Mol%, und
wiederkehrende Struktureinheit der Formel III: 20-50 Mol%.

**11.** Aromatische Copolyamide nach Anspruch 8, dadurch gekennzeichnet, daß $Ar^6$ und $Ar^7$ 1,4-Phenylen bedeuten und X -O-1,4-Phenylen-O- darstellt.

**12.** Aromatische Copolyamide nach Anspruch 11, dadurch gekennzeichnet, daß die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-60 Mol%,
wiederkehrende Struktureinheit der Formel II: 20-40 Mol%, und
wiederkehrende Struktureinheit der Formel III: 10-40 Mol%.

**13.** Aromatische Copolyamide nach Anspruch 8, dadurch gekennzeichnet, daß $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten und X eine direkte C-C-Bindung darstellt.

**14.** Aromatische Copolyamide nach Anspruch 13, dadurch gekennzeichnet, daß die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-70 Mol%,
wiederkehrende Struktureinheit der Formel II: 10-60 Mol%, und
wiederkehrende Struktureinheit der Formel III: 20-60 Mol%.

**15.** Aromatische Copolyamide nach Anspruch 1, dadurch gekennzeichnet, daß $Ar^1$, $Ar^2$ und $Ar^4$ 1,4-Phenylen bedeuten, $Ar^3$ einen Rest der in Anspruch 4 definierten Formel IV bedeutet, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten, X eine direkte C-C-Bindung darstellt, $Ar^5$ einen Rest der in Anspruch 4 definierten Formel IV bedeutet, worin $Ar^6$ ein gegebenenfalls mit einem gegenüber Carbonsäurechloriden inerten Rest substituiertes 1,4-Phenylen bedeutet, $Ar^7$ ein gegebenenfalls mit einem gegenüber Carbonsäurechloriden inerten Rest substituiertes 1,4- oder 1,3-Phenylen bedeutet, und X -O-, $-CH_2-$ oder -O-1,4-Phenylen-O- darstellt.

**16.** Aromatische Copolyamide nach Anspruch 15, dadurch gekennzeichnet, daß $Ar^3$ einen Rest der in Anspruch 4 definierten Formel IV bedeutet, worin $Ar^6$ und $Ar^7$ jeweils einen mit einem gegenüber Carbonsäurechloriden inerten Rest, insbesondere mit Methyl, Methoxy oder Chlor, substituiertes 1,4-Phenylen bedeuten, X eine direkte C-C-Bindung darstellt, $Ar^5$ einen Rest der in Anspruch 4 definierten Formel IV bedeutet, worin $Ar^6$ 1,4-Phenylen bedeutet, und $Ar^7$ 1,3-Phenylen bedeutet, und X -O- darstellt.

**17.** Aromatische Copolyamide nach Anspruch 16, dadurch gekennzeichnet, daß die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-60 Mol%,
wiederkehrende Struktureinheit der Formel II: 20-50 Mol%, und
wiederkehrende Struktureinheit der Formel III: 20-40 Mol%.

**18.** Aromatische Copolyamide nach Anspruch 15, dadurch gekennzeichnet, daß $Ar^3$ einen Rest der in Anspruch 4 definierten Formel IV bedeutet, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten, X eine direkte C-C-Bindung darstellt, $Ar^5$ einen Rest der in Anspruch 4 definierten Formel IV bedeutet, und worin $Ar^6$ und $Ar^7$ 1,4-Phenylen bedeuten und X -O-1,4-Phenylen-O- darstellt.

**19.** Aromatische Copolyamide nach Anspruch 18, dadurch gekennzeichnet, daß die Mengenanteile der wiederkehrenden Struktureinheiten der Formeln I bis III sich innerhalb folgender Bereiche, bezogen auf die Gesamtmenge dieser Struktureinheiten bewegen:
wiederkehrende Struktureinheit der Formel I: 1-60 Mol%,
wiederkehrende Struktureinheit der Formel II: 20-50 Mol%, und
wiederkehrende Struktureinheit der Formel III: 20-40 Mol%.

**20.** Aromatische Copolyamide nach Anspruch 1, dadurch gekennzeichnet, daß diese die wiederkehrenden Struktureinheiten der Formeln I, II, III und V enthalten

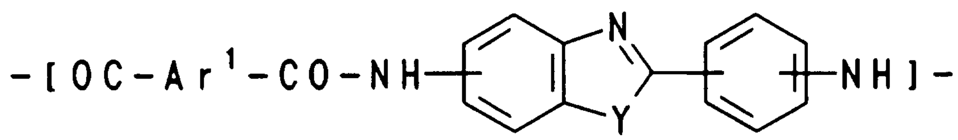 (I),

$-[OC-Ar^2-CO-NH-Ar^3-NH]-$ (II),

$-[OC-Ar^4-CO-NH-Ar^5-NH]-$ (III), und

$-[OC-Ar^8-CO-NH-Ar^9-NH]-$ (V), und

worin $Ar^1$, $Ar^2$, $Ar^3$, $Ar^4$ und $Ar^8$ unabhängig voneinander zweiwertige aromatische Reste bedeuten, deren Valenzbindungen sich in para-Stellung oder in einer zu dieser Stellung vergleichbaren koaxialen oder parallelen Stellung zueinander befinden, Y die in Anspruch 1 definierte Bedeutung besitzt, und $Ar^5$ und $Ar^9$ jeweils voneinander unterschiedliche Reste der Formel IV bedeuten

$- Ar^6-X-Ar^7 -$ (IV),

worin $Ar^6$, $Ar^7$ und X die in Anspruch 4 definierte Bedeutung aufweisen.

**21.** Aromatische Copolyamide nach Anspruch 20, dadurch gekennzeichnet, daß $Ar^1$, $Ar^2$, $Ar^4$ und $Ar^8$ 1,4-Phenylen bedeuten, $Ar^3$ 1,4-Phenylen oder ein zweiwertiger Rest des 4,4'-Diaminobenzanilids ist, $Ar^6$ 1,4-Phenylen bedeutet, das gegebenenfalls mit einem gegenüber Carbonsäurechloriden inerten Rest, insbesondere mit Methyl, Methoxy oder Chlor, substituiert ist, $Ar^7$ 1,4-Phenylen oder 1,3-Phenylen darstellt, das gegebenenfalls mit einem gegenüber Carbonsäurechloriden inerten Rest, insbesondere mit Methyl, Methoxy oder Chlor, substituiert ist, und X eine direkte C-C-Bindung, -O-, $-CH_2-$ oder -O-1,4-Phenylen-O- ist.

**22.** Aromatische Copolyamide nach Anspruch 21, dadurch gekennzeichnet, daß $Ar^5$ ein Rest der Formel IV ist, worin $Ar^6$ und $Ar^7$ 1,4-Phenylen darstellen und X -O-1,4-Phenylen-O- bedeutet und $Ar^9$ ein Rest der Formel IV ist, worin $Ar^6$ 1,4-Phenylen ist, $Ar^7$ 1,3-Phenylen bedeutet und X -O- ist.

**23.** Aromatische Copolyamide nach Anspruch 22, dadurch gekennzeichnet, daß die Mengenanteile der wiederkehrenden Struktureinheiten der Formeln I bis III und V sich innerhalb folgender Bereiche, bezogen auf die Gesamtmenge dieser Struktureinheiten bewegen:
wiederkehrende Struktureinheit der Formel I: 1-15 Mol%,
wiederkehrende Struktureinheit der Formel II: 40-60 Mol%,
wiederkehrende Struktureinheit der Formel III: 1-30 Mol%, und
wiederkehrende Struktureinheit der Formel V: 15-45 Mol%.

**24.** Aromatische Copolyamide nach Anspruch 20, dadurch gekennzeichnet, daß $Ar^5$ ein Rest der Formel IV ist, worin $Ar^6$ und $Ar^7$ 1,4-Phenylen darstellen und X -O-1,4-Phenylen-O- bedeutet und $Ar^9$ ein Rest der Formel IV ist, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten und X eine direkte C-C-Bindung ist.

**25.** Aromatische Copolyamide nach Anspruch 24, dadurch gekennzeichnet, daß die Mengenanteile der wiederkehrenden Struktureinheiten der Formeln I bis III und V sich innerhalb folgender Bereiche, bezogen auf die Gesamtmenge dieser Struktureinheiten bewegen:
wiederkehrende Struktureinheit der Formel I: 1-15 Mol%,
wiederkehrende Struktureinheit der Formel II: 10-40 Mol%,
wiederkehrende Struktureinheit der Formel III: 10-35 Mol%, und
wiederkehrende Struktureinheit der Formel V: 30-60 Mol%.

**26.** Aromatische Copolyamide nach Anspruch 20, dadurch gekennzeichnet, daß $Ar^1$, $Ar^2$, $Ar^4$ und $Ar^8$ 1,4-Phenylen bedeuten, $Ar^3$ 1,4-Phenylen oder ein zweiwertiger Rest des 4,4'-Diaminobenzanilids ist, $Ar^5$ ein Rest der Formel IV ist, worin $Ar^6$ und $Ar^7$ jeweils ein mit einem gegenüber Carbonsäurechloriden inerten Rest, insbesondere mit Methyl, Methoxy oder Chlor, substituiertes 1,4-Phenylen bedeuten und X eine direkte C-C-Bindung ist, und $Ar^9$ ein Rest der Formel IV ist, worin $Ar^6$ 1,4-Phenylen ist, $Ar^7$ 1,3-Phenylen bedeutet und X -O-ist.

**27.** Aromatische Copolyamide nach Anspruch 26, dadurch gekennzeichnet, daß die Mengenanteile der wiederkehrenden Struktureinheiten der Formeln I bis III und V sich innerhalb folgender Bereiche, bezogen auf die Gesamtmenge dieser Struktureinheiten bewegen:
wiederkehrende Struktureinheit der Formel I: 1-15 Mol%,
wiederkehrende Struktureinheit der Formel II: 10-40 Mol%,
wiederkehrende Struktureinheit der Formel III: 30-60 Mol%, und
wiederkehrende Struktureinheit der Formel V: 10-35 Mol%.

**28.** Verfahren zur Herstellung der aromatischen Copolyamide enthaltend die wiederkehrenden Struktureinheiten I, II und III nach Anspruch 1 oder enthaltend die wiederkehrenden Struktureinheiten I, II, III und V nach Anspruch 20, dadurch gekennzeichnet, daß man ein Dicarbonsäuredichlorid der Formel VI oder eine Mischung derartiger Dicarbonsäuredichloride mit einem Gemisch der Diamine der Formeln VII, VIII und IX bzw. VII, VIII, IX und X miteinander umsetzt

$ClOC-Ar^1-COCl$ (VI),

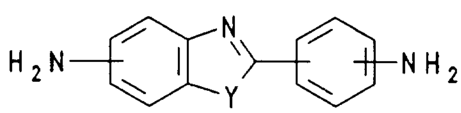
(VII),

$H_2N-Ar^3-NH_2$ (VIII), $H_2N-Ar^5-NH_2$ (IX), $H_2N-Ar^9-NH_2$ (X),

worin $Ar^1$ bis $Ar^9$ und Y die in den Ansprüchen 1 und 20 definierte Bedeutung besitzen.

**29.** Geformte Gebilde, insbesondere Filme und Fasern, aus aromatischen Polyamiden nach Anspruch 1.

**30.** Geformte Gebilde nach Anspruch 30, dadurch gekennzeichnet, daß es sich um Fasern handelt, die eine Zugfestigkeit von mehr als 100 cN/tex, insbesondere 150 bis 290 cN/tex und einen Anfangsmodul, bezogen auf 100 % Dehnung, von mehr als 60 N/tex, insbesondere 100 bis 150 N/tex, aufweisen.

**31.** Verfahren zur Herstellung von geformten Gebilden, insbesondere von Fasern, aus aromatischen Polyamiden nach Anspruch 29 umfassend die Maßnahmen:
i) Herstellen einer Ausformlösung enthaltend ein organisches Lösungsmittel und mindestens 2 Gew.-%, insbesondere 4 bis 20 Gew.-%, bezogen auf die Lösung, eines aromatischen Polyamids nach Anspruch 1

ii) Extrudieren der Ausformlösung durch eine Ausformdüse in eine Lösungsmittelentfernungsvorrichtung, worin das organische Lösungsmittel zumindest zum Teil aus den entstandenen geformten Gebilden entfernt wird und wobei Primärgebilde entstehen, die die für die folgende Weiterverarbeitung ausreichende mechanische Stabilität aufweisen, wobei gegebenenfalls verstreckt wird,
iii) gegebenenfalls Waschen und/oder Verstreckung der Primärgebilde,
iv) Trocknen der Primärgebilde, und
v) Behandlung der getrockneten geformten Gebilde bei Temperaturen von 300 bis 500 °C, gegebenenfalls unter Nachverstreckung, so daß sich die Festigkeit der geformten Gebilde um mindestens 10 %, vorzugsweise mehr als 50 %, bezogen auf die vor der Behandlung vorliegende Festigkeit, erhöht.

**32.** Verfahren zur Herstellung von geformten Gebilden nach Anspruch 31, dadurch gekennzeichnet, daß die Ausformlösung eine Viskosität von mindestens 30 Pa*sec bei 25 °C aufweist und bei einer Temperatur zwischen 25 und 100 °C ausgeformt, insbesondere versponnen wird.

**33.** Verfahren zur Herstellung von geformten Gebilden nach Anspruch 31, dadurch gekennzeichnet, daß als Ausformlösung direkt die bei der Herstellung des aromatischen Polyamids anfallende Lösung eingesetzt wird.

**34.** Verfahren zur Herstellung von geformten Gebilden nach Anspruch 31, dadurch gekennzeichnet, daß als Lösungsmittelentfernungsvorrichtung ein Koagulationsbad eingesetzt wird, worin vorzugsweise als Koagulationsflüssigkeit im Koagulationsbad ein Gemisch aus dem in der Ausformlösung verwendeten organischen Lösungsmittel mit Wasser und/oder mit einem aliphatischen Alkohol eingesetzt wird.

**35.** Verfahren zur Herstellung von geformten Gebilden nach Anspruch 31, dadurch gekennzeichnet, daß Schritte i) bis v) kontinuierlich ausgeführt werden.

**36.** Verfahren zur Herstellung von Fasern nach Anspruch 31, dadurch gekennzeichnet, daß die erhaltenen Fasern nach Schritt iv) aufgespult werden und daß die aufgespulten Fasern einer Hitzebehandlung, vorzugsweise einer Trockenhitzebehandlung, in Schritt v) separat unterzogen werden.

**37.** Verfahren zur Herstellung von Fasern nach Anspruch 31, dadurch gekennzeichnet, daß die Hitzebehandlung in Schritt v) in zwei Schritten durchgeführt wird, wobei der erste Schritt ein Erhitzen der Fäden auf Temperaturen von 300 bis 400 °C, insbesondere von 320 bis 370 °C, und der zweite Schritt ein Erhitzen der Fäden auf Temperaturen von 400 bis 550 °C, insbesondere von 430 bis 480 °C, beinhaltet.

**38.** Geformte Gebilde aus aromatischen Polyamiden enthaltend die wiederkehrende Struktureinheit der Formel I

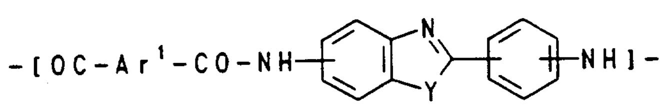

(I),

worin Y -O- oder -NR¹- bedeutet und Ar¹ und R¹ die in Anspruch 1 definierte Bedeutung besitzen, dadurch gekennzeichnet, daß diese einen Gehalt an Schwefel von weniger als 0,1 Gew.-%, bezogen auf die Trockenmasse der geformten Gebilde, aufweisen.

**39.** Geformte Gebilde nach Anspruch 38, dadurch gekennzeichnet, daß das aromatische Polyamid aus wiederkehrenden Struktureinheiten der in Anspruch 1 definierten Formel I besteht.

**40.** Geformte Gebilde nach Anspruch 38, dadurch gekennzeichnet, daß das aromatische Polyamid aus wiederkehrenden Struktureinheiten der in Anspruch 1 definierten Formeln I, II und gegebenenfalls III besteht.